# EUROPÄISCHE PATENTANMELDUNG

(11) **EP 2 253 528 A2**
(43) Veröffentlichungstag der Anmeldung: **24.11.2010**
(21) Anmeldenummer: 10001287.1
(22) Anmeldetag: 08.02.2010
(51) Int. Cl.: B62D 7/15

(54) **Verfahren zum dynamischen Lenkprogrammwechsel**

(30) Priorität: 18.05.2009 DE 102009021693
(71) Anmelder: Mobil Elektronik GmbH, 74243 Langenbeutingen (DE)
(72) Erfinder: Klugesherz, Klaus, Dipl.-Ing., 74626 Bretzfeld (DE)
(74) Vertreter: Laufhütte, Dieter

(57) **Zusammenfassung**

Die vorliegende Erfindung betrifft ein Verfahren zur dynamischen Steuerung eines Lenkprogrammwechsels zwischen geometrisch unabhängigen Lenkprogrammen eines Fahrzeugs, insbesondere Flurförderfahrzeug, das einen stetigen Übergang zwischen den Lenkprogrammen sicherstellt und damit das Fahren und Lenken des Fahrzeugs während des Lenkprogrammwechsels ermöglicht.

## Beschreibung

Die vorliegende Erfindung betrifft ein Verfahren zur dynamischen Steuerung eines Lenkprogrammwechsels zwischen geometrisch unabhängigen Lenkprogrammen eines Fahrzeugs. Insbesondere kommt das genannte Verfahren bei Flurförderfahrzeugen zur Anwendung.

Unter den innerbetrieblichen Flurförderzeugen ist ein großer Teil in der Lage sich sowohl in Längsrichtung als auch in Querrichtung zu bewegen. Dieser zusätzliche Freiheitsgrad in der Bewegung des Fahrzeugs vereinfacht die einzelnen Rangiermanöver des Fahrzeugs erheblich und führt dadurch zu einer effizienteren Arbeitsweise. Zu diesem Zweck stehen diverse Lenkprogramme zur Verfügung, die in die Gruppen Längsprogramme, Querprogramme und Sonderprogramme eingeteilt werden können. Zu der Gruppe der Längsprogramme gehören diese Lenkprogramme, deren Hauptrichtung in Längsrichtung des Fahrzeugs orientiert ist. Im Gegensatz dazu, weist die Hauptrichtung der einzelnen Lenkprogramme der Gruppe der Querprogramme eine Orientierung in Querrichtung des Fahrzeugs auf. Als Beispiel für die sogenannten Längs- bzw. Querprogramme seien die Allradlenkung, Diagonallenkung, Vorderachslenkung und Hinterachslenkung genannt. Ebenso können die Festprogramme in die Gruppen der Längs- bzw. Querprogramme eingeordnet werden, bei denen alle gelenkten Räder keinen Neigungswinkel entweder zur Längs- oder zur Querrichtung aufweisen.

Während innerhalb der Gruppe Längsprogramme oder Querprogramme das Lenkprogramm unter gewissen Umständen (z. B. Lenkung in Geradeausstellung) auch während der Fahrt gewechselt werden kann, ist ein Lenkprogrammwechsel zwischen Lenkprogrammen unterschiedlicher Gruppen nur bei Fahrzeugstillstand möglich. Dabei werden bei einem Lenkprogrammwechsel von Längs- auf Querfahrt (oder umgekehrt) der Fahrantrieb gestoppt und die Räder während des Fahrzeugstillstands um 90° in die neu angewählte Hauptfahrtrichtung geschwenkt. Sobald alle gelenkten Räder vollständig umgeschwenkt sind, wird der Fahrantrieb wieder freigegeben. Nachteilig dabei ist, dass jedoch jede Lenkbewegung während des Stillstands des Fahrzeugs eine erhöhte Belastung der gesamten Lenkmechanik, sowie eine stärkere Reifenabnutzung und damit höhere Fahrbahnbelastung bedeutet.

Es sind zwar durchaus Fahrzeuge bekannt, die in bestimmten Lenkprogrammen, wie z. B. Allradlenkung oder Diagonallenkung Lenkwinkel über 90° erreichen, jedoch bleibt in diesen Fällen das Lenkprogramm konstant und es erfolgt somit kein Wechsel des Programms.

Aufgabe der vorliegenden Erfindung ist es damit, dem Fachmann ein Verfahren an die Hand zu geben, das durch eine erfindungsgemäße Weiterbildung die oben genannten Nachteile umgeht. Dabei soll das erfindungsgemäße Verfahren eine dynamische Steuerung eines Lenkprogrammwechsels vollziehen, bei dem das Fahren des Fahrzeuges während des Lenkprogrammwechsels ermöglicht werden soll.

Diese Aufgabe wird durch ein Verfahren zur dynamischen Steuerung eines Lenkprogrammwechsels nach den Merkmalen des Anspruchs 1 gelöst. Demnach handelt es sich bei der Erfindung um ein Verfahren zur dynamischen Steuerung eines Lenkprogrammwechsels zwischen geometrisch unabhängigen Lenkprogrammen eines Fahrzeugs, insbesondere eines Flurförderfahrzeugs, das einen stetigen Übergang zwischen den Lenkprogrammen sicherstellt und damit das Fahren und Lenken des Fahrzeugs während des Lenkprogrammwechsels ermöglicht. Dadurch werden die gelenkten Räder des Fahrzeugs während der Fahrt im Zuge des Lenkprogrammwechsels in die neue Hauptrichtung geschwenkt, wobei trotzdem während dieses Vorgangs ein Lenken durch den Fahrzeugführer möglich ist. Prinzipiell ist der dynamische Lenkprogrammwechsel während der Fahrt bei beliebiger Fahrgeschwindigkeit und bei beliebigem Lenkeinschlag aktivierbar.

Dieser Ansatz führt zu einem schnelleren Lastumsatz, insbesondere bei einem Flurförderfahrzeug, da das Fahrzeug auch während des Lenkprogrammwechsels in Richtung des Ziels bewegt werden kann und nicht gestoppt werden muss. Ferner hat das erfindungsgemäße Verfahren weitreichende positive Effekte zur Folge, da zum Beispiel die gelenkten Räder nicht im Stillstand verschwenkt werden müssen und sich somit eine deutliche Reduzierung der Reifenabnutzung als auch der Fahrbahnbelastung ergibt. Weiterhin sind für Lenkbewegungen während der Fahrt geringere Kräfte als im Stillstand erforderlich, woraus eine geringere Belastung der gesamten Achsmechanik resultiert.

Vorteilhafterweise wird der Lenkprogrammwechsel mittels einer dynamischen und stetigen Bewegung des Lenkpols aller gelenkten Räder vorgenommen. Im Gegensatz dazu weist ein Verfahren eines herkömmlichen Lenkprogrammwechsels einen unstetigen Lenkpolsprung auf, was voraussetzt, dass das Fahrzeug vor solch einem Programmwechsel angehalten wird und alle gelenkten Räder vollständig während des Stillstands umgeschwenkt werden. Da beim erfindungsgemäßen dynamischen Lenkprogrammwechsel alle gelenkten Räder entsprechend des sich bewegenden, gemeinsamen Lenkpols gelenkt werden, ist sowohl das Fahren als auch das Lenken während des Lenkprogrammwechsels möglich. So lassen sich bereits im Zuge des Lenkprogrammwechsels Lenkkorrekturen vornehmen, um z. B. ohne Rangieren an eine Übergabestation anzudocken oder in einen Regalgang einzufahren.

Dabei ist das erfindungsgemäße Verfahren zur dynamischen Steuerung eines Lenkprogrammwechsels zwischen beliebigen Längs- und Querprogrammen möglich. In diesem Sinne kann ein Längsprogrammwechsel von einer Längsfahrt auf eine Querfahrt oder von einer Querfahrt auf eine Längsfahrt inklusive des dafür erforderlichen Umschwenkvorgangs abgedeckt werden. Dabei kann beispielsweise der erforderliche Umschwenkvorgang von einer Querfahrt zu einer Längsfahrt eine Drehung der gelenkten Räder um etwa 90° bewirken.

Weiterhin ist es denkbar, dass der dynamische Lenkprogrammwechsel zwischen beliebigen Lenkprogrammen aus der Gruppe der Längs- und Querprogramme durchführbar ist. Beispielsweise ist der dynamische Lenkprogrammwechsel von einer Hinterachselenkung in Längsrichtung zu einer Allradlenkung in Querrichtung genauso möglich, wie der Wechsel von einer Vorderachslenkung in Querrichtung zu einer Allradlenkung in Längsrichtung.

Dabei kann es vorgesehen sein, dass sowohl der Umschwenkvorgang als auch die Anpassung der Lenkgeometrien von Start- und Ziellenkprogramm in der Bewegung des Lenkpols enthalten sind. Durch die Integration des Übergangs zwischen den unterschiedlichen Lenkgeometrien der beiden Lenkprogramme, wie beispielsweise Allradlenkung oder Hinterachslenkung, in die Lenkpolbewegung, wird ein besonders flüssiger Lenkprogrammwechsel erreicht.

Ferner ist es vorteilhaft, dass der Umschwenkvorgang mittels einer Rotation des Lenkpols um die Mitte der aktuellen Lenklinie erfolgt. Dabei treffen sich alle Pollinien der einzelnen gelenkten Räder im besagten Lenkpol. Die Rotation des Lenkpols erfolgt dabei um die Mitte der aktuellen Lenklinie, welche die Linie darstellt, auf der sich der Lenkpol bei Veränderungen des Lenksollwertes bewegt. Wird beispielsweise ein Umschwenkvorgang aufgrund eines Lenkprogrammwechsels von einem Längsprogramm in ein Querprogramm vorgenommen, so rotiert der Lenkpol auf der genannten Rotationsbahn um 90°. Durch die Rotation des Lenkpols werden folglich alle gelenkten Räder im Bereich des Rotationswinkels des Lenkpols ebenfalls in dieselbe Richtung verschwenkt.

Um eine Anpassung der Lenkgeometrie von Start- und Ziellenkprogramm vorzunehmen, ist es denkbar, eine Verschiebung des Lenkpols auf die entsprechende Ziellenklinie durchzuführen. Durch die Verschiebung der entsprechenden Lenklinie kann zwischen den verschiedenen Lenkprogrammen der einzelnen Gruppen Längs- bzw. Querprogramme gewechselt werden.

Bevorzugt ist die Lenkung mittels des Lenksollwertgebers im momentan aktiven Lenkprogramm während des Lenkprogrammwechsels aktiv. Dies bedeutet, dass von einem Programmwechsel von einem ersten in ein zweites Lenkprogramm die Lenkung im ersten Lenkprogramm während des Wechsels aktiv bleibt. Erst nach der vollständigen, erfolgreichen Durchführung des Umschwenkvorgangs und der Anpassung der Lenkgeometrie an das entsprechende Ziellenkprogramm wird die Lenkung mittels des Lenksollwertgebers im zweiten, das heißt im entsprechend umgeschalteten Lenkprogramm aktiv. Dabei ist der Lenksollwertgeber bevorzugt in der Form eines bekannten Lenkrads ausgeführt.

Zur Aktivierung eines dynamischen Lenkprogrammwechsels können unterschiedliche Bedienelemente eingesetzt werden. Bevorzugt wird ein solcher Lenkprogrammwechsel mittels zu definierenden Tasten ausgelöst. Durch Betätigung der Taste wird ein entsprechender Lenkprogrammwechsel ausgelöst und der Fortschritt des Lenkprogrammwechsels über eventuell vorhandene Anzeigeelemente ausgegeben. Dabei steht in der Regel mindestens eine Taste für jede verfügbare Richtung bzw. Richtungsänderung zur Verfügung.

Denkbar ist auch, dass der Lenkprogrammwechsel mittels eines Fahrtrichtungsschalters ausgelöst wird.

Weiterhin denkbar ist auch, dass der Lenkprogrammwechsel mittels eines Joysticks ausgelöst wird. Oftmals sind zur Implementierung des erfindungsgemäßen Verfahrens zur dynamischen Steuerung eines Lenkprogrammwechsels nur geringfügige Modifikationen erforderlich, da in vielen Fällen die bereits vorhandenen Bedienelemente verwendet werden können.

Als äußerst vorteilhaft erweist sich, wenn das Bedienelement tastend ausgeführt ist. Dabei muss das Bedienelement solange betätigt gehalten werden, bis der dynamische Lenkprogrammwechsel abgeschlossen ist. Wird das Bedienelement während des dynamischen Lenkprogrammwechsels losgelassen, bleibt der Umschwenkvorgang in der momentanen Stellung stehen, die Lenkung ist aber weiterhin im aktuellen Lenkprogramm aktiv. Bei erneutem Betätigen des Bedienelements in dieselbe Richtung kann der dynamische Lenkprogrammwechsel fortgeführt und abgeschlossen werden.

Denkbar ist dabei auch, dass bei erneutem Betätigen des tastenausgeführten Bedienelements in einer entgegengesetzten Richtung der Lenkprogrammwelchsel wieder rückgängig gemacht werden kann, das heißt der Umschwenkvorgang der gesteuerten Räder entgegengesetzt erfolgt und auf die Ausgangsstellung zurückverschwenkt wird.

Vorteilhafterweise wird die Fahrgeschwindigkeit automatisch während des Lenkprogrammwechsels reduziert und nach dem Lenkprogrammwechsel wieder angehoben. Die Wiederherstellung der Originalgeschwindigkeit erfolgt dabei zu dem Zeitpunkt, sobald der dynamische Lenkprogrammwechsel mit aktiven neuen Lenkprogrammen abgeschlossen ist.

Um den dynamischen Lenkprogrammwechsel voll auszuschöpfen, sind die gelenkten Räder des Fahrzeugs vorteilhafterweise um 360° drehbar. Dadurch wird es ermöglicht, dass der gemeinsame Lenkpol der steuerbaren Räder sich auf einer vollständigen Kreisbahn um die Mitte der Lenklinie bewegen kann. Dabei kann es auch ausreichend sein, dass die Räder sich jeweils nur in einer Richtung um 180° verdrehen lassen, wodurch ebenfalls eine Stellposition der Räder auf einer vollständigen Kreisbahn erzielbar ist. Auf diese Weise ist sowohl aus Längsfahrt ein dynamischer Lenkprogrammwechsel in -90° oder +90° Querfahrt als auch aus Querfahrt ein dynamischer Lenkprogrammwechsel in 0° oder 180° Längsfahrt möglich.

Zur Erfassung des aktuellen Stellwinkels der zu steuernden Räder ist es vorteilhaft, dass mittels eines Winkelmessungsmittels der aktuelle Stellungswinkel der zu steuernden Räder im gesamten Drehwinkelbereich erfaßbar ist. Dabei werden die aktuellen Stellungswinkel der zu steuernden Räder laufend durch das Winkelerfassungsmittel erfaßt und zur Auswertung an eine Steuerung zur Ausführung des erfindungsgemäßen Verfahrens zur dynamischen Steuerung eines Lenkprogrammwechsels weitergegeben.

Die vorliegende Erfindung wird nun anhand eines Ausführungsbeispiels sowie Zeichnungen näher erläutert. Dabei zeigen:
- Figur 1:: die schematische Darstellung eines Fahrzeugs mit seinen vier gelenkten Rädern,
- Figur 2:: die erfindungsgemäßen Verfahrensschritte eines Lenkprogrammwech- sels von Längs-Allradlenkung auf Quer-Hinterachslenkung und
- Figur 3:: die erfindungsgemäßen Verfahrensschritte eines Lenkprogrammwech- sels von Quer-Hinterachslenkung auf Längs-Allradlenkung.

In den nachfolgenden Ausführungsbeispielen des erfindungsgemäßen Verfahrens zur dynamischen Steuerung eines Lenkprogrammwechsels wird ein tastender Fahrtrichtungsschalter als Bedienelement und ein symmetrisches Fahrzeug mit vier gelenkten Rädern angenommen. Es sei an dieser Stelle zu erwähnen, dass das dynamische Lenkprogrammwechselverfahren dennoch aber auch bei beliebigen Fahrzeugkonfigurationen anwendbar ist.

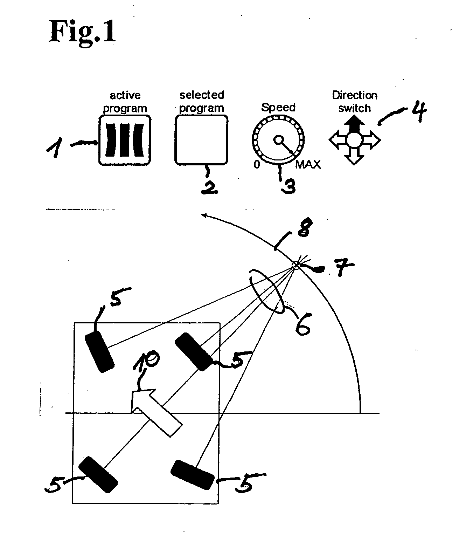

In Figur 1 sind vier Anzeigelemente 1, 2, 3, 4 dargestellt, die den jeweiligen Fahrzeugstatus während eines dynamischen Lenkprogrammwechsels anzeigen. Dabei symbolisiert das Anzeigelement 1 das momentan zur Laufzeit aktive Lenkprogramm bzw. Lenkgeometrie, wobei das aktuell dargestellte Symbol aus Figur 1 eine Allradlenkung im Längsprogramm charakterisiert. Das zweite Anzeigeelement 2 zeigt das neu angewählte Lenkprogramm an, der Zeiger im Geschwindigkeitssymbol 3 verweist auf die momentan verfügbare Maximalgeschwindigkeit des Fahrzeugs und der schwarz gefüllte Pfeil aus dem Anzeigeelement 4 deutet in die Richtung der momentan gewählten Hauptfahrtrichtung des Fahrzeuges.

Weiterhin sind in Figur 1 die vier gelenkten Räder 5 eines symmetrischen Fahrzeugs dargestellt. Dabei treffen sich die einzelnen Pollinien 6 der gelenkten Räder 5 im gemeinsamen Lenkpol 7, der als kleiner Kreis dargestellt ist. Der Pfeil 10 in der Mitte der Lenklinie stellt dabei die momentane Hauptfahrtrichtung des Fahrzeugs dar. Der gebogene Pfeil 8 zeichnet eine Kreisbahn, auf der sich der Lenkpol 7 bei einer Rotation um die Mitte der Lenklinie bewegen würde.

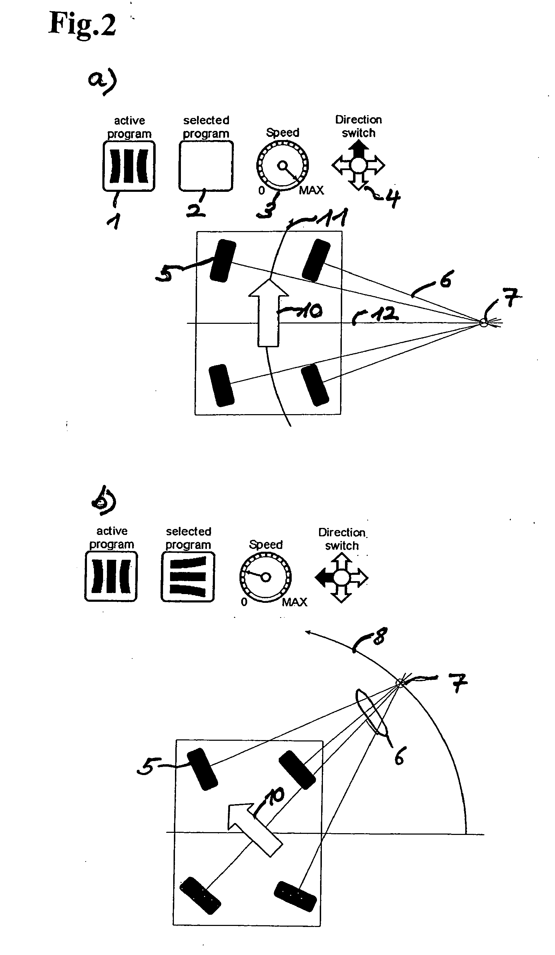

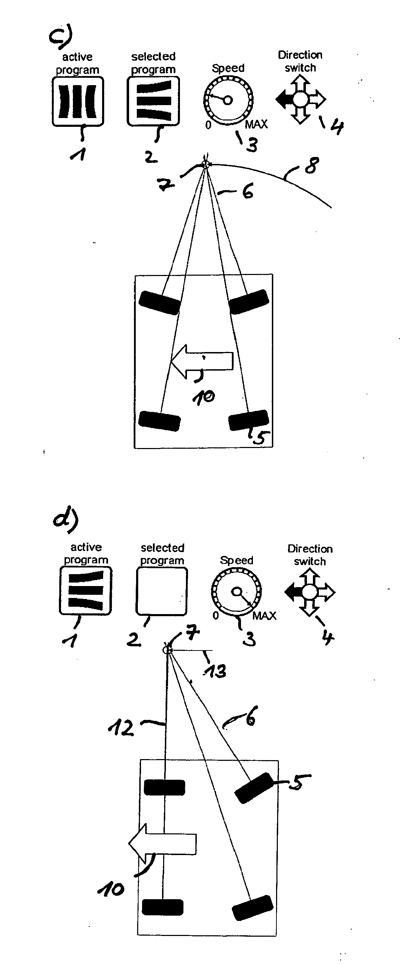

In Figur 2 werden die einzelnen Prozessschritte exemplarisch dargestellt, die das erfindungsgemäße Verfahren bei einem Lenkprogrammwechsel von Längs-Allradlenkung auf eine Quer-Hinterachslenkung durchläuft. Dabei wird anhand der vier Anzeigeelemente 1 bis 4 des ersten Verfahrensschritt Figur 2a mitgeteilt, dass momentan eine Längs-Allradlenkdung aktiv ist, kein Programm zu einem Lenkprogrammwechsel ausgewählt ist, aktuell die maximal verfügbare Geschwindigkeit des Fahrzeugs erreichbar ist und die momentan ausgewählte Hauptfahrtrichtung des Fahrzeugs in Längsrichtung erfolgt. Der große Pfeil 10 kennzeichnet dabei ebenfalls noch mal die durch die Radstellung gegebene Hauptfahrtrichtung des Fahrzeugs in Längsrichtung des Fahrzeugs. Zusätzlich ist das vierrädrige Fahrzeug wieder exemplarisch über seine vier lenkbaren Räder 5, deren einzelnen Pollinien 6 wieder in einem gemeinsamen Lenkpol 7 zusammenlaufend, abgebildet. Weiterhin ist die Lenklinie 12 dargestellt, auf der sich der Lenkpol 7 bei Veränderung des Lenksollwertes bewegt. Wandert der Lenkpol 7 entlang der Lenklinie 12 zum Mittelpunkt des Fahrzeuges, so wird durch die Lenkung ein engerer Kurvenradius des Fahrzeuges erzielt. Gleiches gilt für die Entfernung des Lenkpols 7 vom Fahrzeugmittelpunkt, wodurch der Einschlagwinkel der Räder 5 im Verhältnis zur Längsfahrt reduziert werden kann.

In der aktuellen Konfiguration der Figur 2a fährt das Fahrzeug in Längs-Allradlenkung vorwärts mit eingeschlagener Lenkung.

Im nächsten Schritt wählt der Fahrer mit dem Fahrtrichtungsschalter die Hauptrichtung Querfahrt an, was durch das Anzeigeelement 4 aus der Figur 2b ersichtlich wird. Bei der Wahl des neuen Lenkprogramms über einen Fahrtrichtungsschalter wird automatisch das zuletzt aktive Querfahrtlenkprogramm angewählt (oder ein Default-Programm beim ersten Wechsel auf Querfahrt). Das zuletzt aktive Querfahrtlenkprogramm bzw. das Default-Programm wird im Anzeigeelement 2 dargestellt und symbolisiert in Figur 2b eine Vorderachslenkung in Querrichtung.

Durch die Auswahl des Fahrers einer Hauptrichtung Querfahrt mit dem Fahrtrichtungsschalter wird nun die Hauptfahrtrichtung 10 stetig von Längs- (0°) auf Querfahrt (90°) geschwenkt. Dieses Umschwenken erfolgt mittels einer gegen den Uhrzeigersinn gerichteten Rotation des Lenkpols 7 auf der Kreisbahn 8 um die Mitte der aktuellen Lenklinie 12. Während des Umschwenkens ist das Fahrzeug in Längs-Allradlenkung weiterhin lenkbar und mit reduzierter Fahrgeschwindigkeit auch fahrbar.

Am Ende des Umschwenkvorgangs erreicht die Hauptrichtung 10 die Querfahrt. Zu diesem Zeitpunkt ist noch immer eine Allradlenkung aktiv, was gut aus dem Anzeigeelement 1 der Figur 2c zu erkennen ist.

Der Wechsel auf die ausgewählte Lenkgeometrie erfolgt in Figur 2d. Mit Hilfe einer Verschiebung des Lenkpols 7 entlang des Pfeils 13 auf die Lenklinie 12 der Hinterachslenkung erfolgt somit der Wechsel auf die angewählte Querfahrthinterachslenkung. Auch während dieser Verschiebung ist die Lenkung zu jedem Zeitpunkt aktiv, so dass der Fahrer aktiv die Bewegung des Fahrzeugs steuern kann. Sobald diese Verschiebung abgeschlossen ist, ist der Lenkprogrammwechsel beendet. Das aktive Lenkprogramm ist nun Querfahrthinterachslenkung und die maximale Fahrgeschwindigkeit ist wie aus dem Anzeigeelement 3 ersichtlich, wieder freigegeben.

In dem oben genannten Beispiel lässt sich das erfindungsgemäße Verfahren in zwei Hauptverfahrensschritte einteilen. Im ersten Schritt erfolgt ein Umschwenken der Räder in die ausgewählte Hauptrichtung in dessen Anschluß der eigentliche Lenkprogrammwechsel vollzogen wird durch die Verschiebung des Lenkpols 7 auf die entsprechende Lenklinie 12 der ausgewählten Lenkgeometrie.

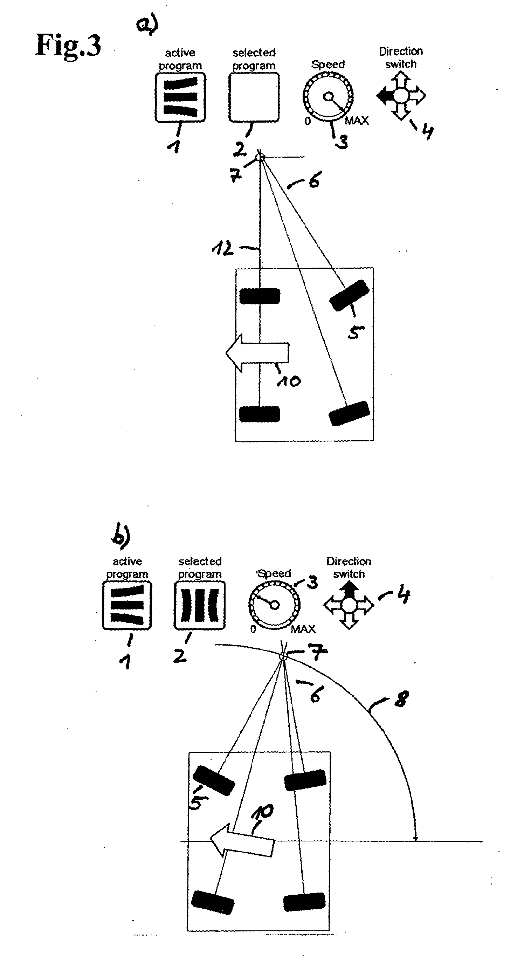

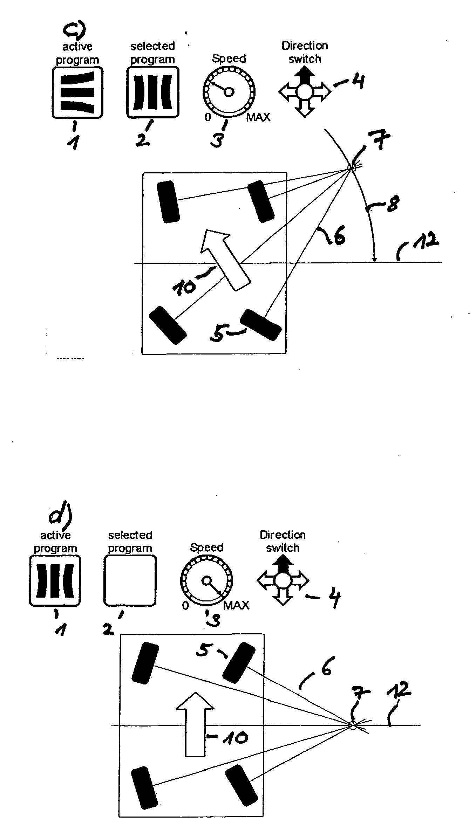

In den einzelnen Zeichnungen der Figur 3 wird nun ein weiterer Ausführungsprozeß des erfindungsgemäßen Verfahrens dargestellt, bei dem das Umschwenken auf die neu ausgewählte Hauptrichtung und der dynamische Wechsel auf das neue Lenkprogramm parallel ausgeführt werden.

Dabei gelten für die einzelnen Zeichnungen der Figur 3 dieselben Bezugszeichen sowie wird zur Veranschaulichung des Verfahrens wieder auf einen tastenden Fahrtrichtungsschalter als Bedienelement und ein symmetrisches Fahrzeug mit vier gelenkten Rädern 5 zurückgegriffen.

In Figur 3a ist ersichtlich, dass das Fahrzeug in Querhinterachslenkung vorwärts mit eingeschlagener Lenkung fährt. Durch die Anwahl des Fahrers mit dem Fahrtrichtungsschalter der Hauptrichtung Längsfahrt wird automatisch das zuletzt aktive Längsfahrtlenkprogramm angewählt oder ein Default-Programm beim ersten Wechsel auf Längsfahrt. Damit ist aktuell in den Anzeigeelementen 1 das aktive Lenkprogramm dargestellt, im Anzeigeelement 2 das Ziellenkprogramm Allradlenkung in Längsfahrt und das Anzeigeelement 4 zeigt die ausgewählte Hauptrichtung an. Weiterhin wird automatisch durch die Steuerung die Fahrgeschwindigkeit reduziert, was durch das Anzeigeelement 3 ausgewiesen wird. Zu Beginn des dynamischen Lenkprogrammwechsels wird nun die Hauptfahrtrichtung stetig von Quer-(90°) auf Längsfahrt (0°) geschwenkt (Figur 3b, 3c). Dieses Umschwenken erfolgt mittels einer im Uhrzeigersinn verlaufenden Rotation auf der Kreisbahn 8 des Lenkpols 7 um die Mitte der aktuellen Lenklinie 12. Ferner ist zu jedem Zeitpunkt des dynamischen Lenkprogrammwechsels das Fahrzeug lenkbar, was durch eine Verschiebung des Lenkpols 7 entlang der Lenklinie 12 erfolgt.

Im Gegensatz zu dem beschriebenen dynamischen Lenkprogrammwechsel der Zeichnungen aus Figur 2 wird der Lenkpol 7 während des Umschwenkvorgangs so gesteuert, dass ein kontinuierlicher Übergang auf das Lenkprogramm Längs-Allradlenkung erfolgt. Dies bedeutet, dass während des Umschwenkvorgangs eine dynamische Anpassung der Lenklinie 12 (bei Quer-Hinterachslenkung Vorne und bei Längs-Allradlenkdung in der Mitte liegend) vorgenommen wird. Sobald der Lenkpol 7 die Lenklinie 12 für Längs-Allradlenkung erreicht, ist der Lenkprogrammwechsel beendet. Das aktive Lenkprogramm ist nun Längsfahrtallradlenkung und die maximale Fahrgeschwindigkeit wird durch die dynamische Steuerung wie der freigegeben (Figur 3d).

Bei beiden Verfahrensbeispielen zeichnet sich das erfindungsgemäße Verfahren durch eine stetige Bewegung des Lenkpols 7 aus, wobei weiter alle gelenkten Räder 5 entsprechend des sich bewegenden, gemeinsamen Lenkpols 7 gelenkt werden, wodurch sowohl das Fahren als auch das Lenken über den Lenkwertsollgeber während des Lenkprogrammwechsels möglich ist.

Das aufgezeigte erfindungsgemäße Verfahren ist dabei jedoch nicht auf die vorgegebene zweiachsige Ausführungsvariante der Ausführungsbeispiele beschränkt, sondern kann vielmehr Anwendung auf beliebige Fahrzeuge und Achsanordnungen finden. Da in vielen Fällen die bereits vorhandenen Bedienelemente verwendet werden können um das erfindungsgemäße Verfahren innerhalb des Fahrzeugs zu implementieren, sind nur minimale Modifikationen am Fahrzeug erforderlich. Ein großer Vorteil des erfindungsgemäßen Verfahrens ergibt sich dadurch, dass der dynamische Lenkprogrammwechsel ohne Stop des Fahrzeugs ablaufen kann. Als positiver Effekt des erfindungsgemäßen Verfahrens sei auch genannt, dass sich aufgrund der geringeren Anzahl von Start-Stop-Vorgängen des Fahrzeugs eine längere Batteriestandzeit ergibt. Auch führt das erfindungsgemäße Verfahren dazu, dass die Lenkbewegungen während der Fahrzeugbewegung durchgeführt werden können und nicht während des Fahrzeugstillstands. Dadurch wird der Reifenabrieb bei einer Lenkbewegung wesentlich reduziert und weiterhin die Fahrbahn deutlich geringer belastet. Darüber hinaus bedeutet eine Lenkbewegung während der Fahrt eine deutlich geringere Belastung der Achsemechanik, da für Lenkbewegungen während der Fahrt geringere Lenkkräfte erforderlich sind als im Stillstand.

## Patentansprüche

1. Verfahren zur dynamischen Steuerung eines Lenkprogrammwechsels zwischen geometrisch unabhängigen Lenkprogrammen eines Fahrzeugs, insbesondere Flurförderfahrzeug, das einen stetigen Übergang zwischen den Lenkprogrammen sicherstellt und damit das Fahren und Lenken des Fahrzeugs während des Lenkprogrammwechsels ermöglicht.

2. Verfahren nach Anspruch 1, **dadurch gekennzeichnet, dass** der Lenkprogrammwechsel mittels einer dynamischen und stetigen Bewegung des Lenkpols aller gelenkten Räder vorgenommen wird.

3. Verfahren nach einem der vorhergehenden Ansprüche, **dadurch gekennzeichnet, dass** Lenkprogrammwechsel von Längsfahrt auf Querfahrt oder von Querfahrt auf Längsfahrt inklusive des erforderlichen Umschwenkvorgangs abgedeckt sind.

4. Verfahren nach einem der vorhergehenden Ansprüche, **dadurch gekennzeichnet, dass** der dynamische Lenkprogrammwechsel zwischen beliebigen Längs- und Querprogrammen durchführbar ist.

5. Verfahren nach einem der vorhergehenden Ansprüche, **dadurch gekennzeichnet, dass** sowohl der Umschwenkvorgang als auch die Anpassung der Lenkgeometrien von Start- und Ziellenkprogramm in der Bewegung des Lenkpols enthalten sind.

6. Verfahren nach Anspruch 5, **dadurch gekennzeichnet, dass** der Umschwenkvorgang mittels einer Rotation des Lenkpols um die Mitte der aktuellen Lenklinie erfolgt.

7. Verfahren nach Anspruch 5 oder 6, **dadurch gekennzeichnet, dass** die Anpassung der Lenkgeometrie von Start- und Ziellenkprogramm mittels einer Verschiebung des Lenkpols auf die entsprechende Ziellenklinie erfolgt.

8. Verfahren nach einem der vorhergehenden Ansprüche, **dadurch gekennzeichnet, dass** die Lenkung mittels des Lenksollwertgebers im momentan aktiven Lenkprogramm während des Lenkprogrammwechsels aktiv bleibt.

9. Verfahren nach einem der vorhergehenden Ansprüche, **dadurch gekennzeichnet, dass** der Lenkprogrammwechsel mittels Tasten ausgelöst wird.

10. Verfahren nach einem der vorhergehenden Ansprüche, **dadurch gekennzeichnet, dass** der Lenkprogrammwechsel mittels eines Fahrtrichtungsschalters ausgelöst wird.

11. Verfahren nach einem der vorhergehenden Ansprüche, **dadurch gekennzeichnet, dass** der Lenkprogrammwechsel mittels eines Joysticks ausgelöst wird.

12. Verfahren nach einem der vorhergehenden Ansprüche, **dadurch gekennzeichnet, dass** der Lenkprogrammwechsel tastend gesteuert wird und die Verstellung des Lenkpols gestoppt wird, sobald das Bedienelement nicht mehr betätigt ist.

13. Verfahren nach einem der vorhergehenden Ansprüche, **dadurch gekennzeichnet, dass** der Lenkprogrammwechsel mittels einer Betätigung des Bedienelements in die Gegenrichtung rückgängig gemacht werden kann.

14. Verfahren nach einem der vorhergehenden Ansprüche, **dadurch gekennzeichnet, dass** die Fahrgeschwindigkeit automatisch während des Lenkprogrammwechsels reduziert und nach dem Lenkprogrammwechsel wieder angehoben wird.

15. Verfahren nach einem der vorangegangenen Ansprüche, **dadurch gekennzeichnet, dass** die aktuellen Stellungswinkel der zu steuernden Räder mittels eines Winkelmessungsmittels im gesamten Drehwinkelbereich erfaßbar sind.

16. Verfahren nach einem der vorangegangenen Ansprüche, **dadurch gekennzeichnet, dass** die gelenkten Räder des Fahrzeugs um 360 Grad drehbar sind.
